(19) Europäisches Patentamt
European Patent Office
Office européen des brevets

(11) Veröffentlichungsnummer : **0 454 740 B1**

(12) # EUROPÄISCHE PATENTSCHRIFT

(45) Veröffentlichungstag der Patentschrift :
04.08.93 Patentblatt 93/31

(51) Int. Cl.$^5$ : **G11B 7/09**

(21) Anmeldenummer : 90902187.5

(22) Anmeldetag : 09.01.90

(86) Internationale Anmeldenummer :
PCT/EP90/00035

(87) Internationale Veröffentlichungsnummer :
WO 90/08381 26.07.90 Gazette 90/17

(54) **OPTISCHE ABTASTVORRICHTUNG.**

(30) Priorität : 20.01.89 DE 3901574
23.12.89 DE 3942943

(43) Veröffentlichungstag der Anmeldung :
06.11.91 Patentblatt 91/45

(45) Bekanntmachung des Hinweises auf die
Patenterteilung :
04.08.93 Patentblatt 93/31

(84) Benannte Vertragsstaaten :
AT BE CH DE DK ES FR GB IT LI LU NL SE

(56) Entgegenhaltungen :
PATENT ABSTRACTS OF JAPAN, Bd. 7, Nr.
266 (P-239)(1411) 26.November 1983; &
JP-A-58 146034
PATENT ABSTRACTS OF JAPAN, Bd. 7, Nr.
202 (P-221)(1347) 7.September 1983; & JP-A-58
100244

(73) Patentinhaber : **Deutsche Thomson-Brandt GmbH**
**Hermann-Schwer-Strasse 3 Postfach 1307**
**W-7730 Villingen-Schwenningen (DE)**

(72) Erfinder : **MORIMOTO, Yasuaki**
**2-8-1-208 Shinden**
**Ichikawa-city CHIBA-KEN (JP)**
Erfinder : **ZUCKER, Friedhelm**
**Frankenstrasse 5**
**W-7730 Villingen-Schwenningen (DE)**
Erfinder : **SCHRÖDER, Heinz-Jörg**
**Terra-Wohnpark 9**
**W-7730 VS-Marbach (DE)**
Erfinder : **BÜCHLER, Christian**
**Keltenweng 3**
**W-7730 VS-Marbach (DE)**
Erfinder : **WEISSMANN, Gerhard**
**Thomasgasse 2**
**W-7730 Villingen-Schwenningen (DE)**

## Beschreibung

Die Erfindung betrifft eine optische Abtastvorrichtung mit einer Objektivlinse für ein Aufzeichnungs- und/oder Wiedergabegerät, bei dem ein Lichtstrahl nach dem Einstrahlverfahren auf einen Aufzeichnungsträger fokussiert und vom Aufzeichnungsträger auf einen Vierquadrantenphotodetektor aus vier Photodioden reflektiert wird, dessen eine Achse parallel zur Spurrichtung verläuft, bei dem aus den Ausgangssignalen der Photodioden des Vierquadrantenphotodetektors durch Summen- und Differenzbildung das Spurfehlersignal TE erzeugt wird, bei dem der Lichtstrahl mittels eines Spurregelkreises, der aus einem Grobantrieb und einem mit dem Grobantrieb mechanisch verbundenen Feinantrieb aufgebaut ist, auf den Datenspuren des Aufzeichnungsträgers geführt wird, bei dem die Objektivlinse relativ zum Vierquadrantenphotodetektor mittels des Feinantriebs in einer Richtung bewegbar oder kippbar ist, die einen vorgebbaren Winkel $\alpha$ zur Normalen der Spurrichtung einschließt.

CD-Spieler, Videoplattenspieler, DRAW-Disc-Spieler oder magneto-optische Aufzeichnungs- und Wiedergabegeräte sind beispielsweise mit derartigen optischen Abtastvorrichtungen ausgestattet.

Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl zusätzlich in radialer Richtung verschiebbar oder z.B. um einen vorgebbaren kleinen Winkel auslenkbar. Mittels des Feinantriebs kann daher der Lichtstrahl ein kleines Stück - etwa 1 mm - entlang einem Radius der CD-Platte gefahren werden.

Um eine einwandfreie Wiedergabe der Daten, seien es nun z.B. Bild und Ton bei einem Videoplattenspieler oder bloß der Ton bei einem CD-Spieler oder die Daten einer magneto-optischen Platte, zu erzielen, ist neben einer genauen Fokussierung des Lichtstrahls auf die Platte eine präzise Führung entlang den Datenspuren der Platte erforderlich.

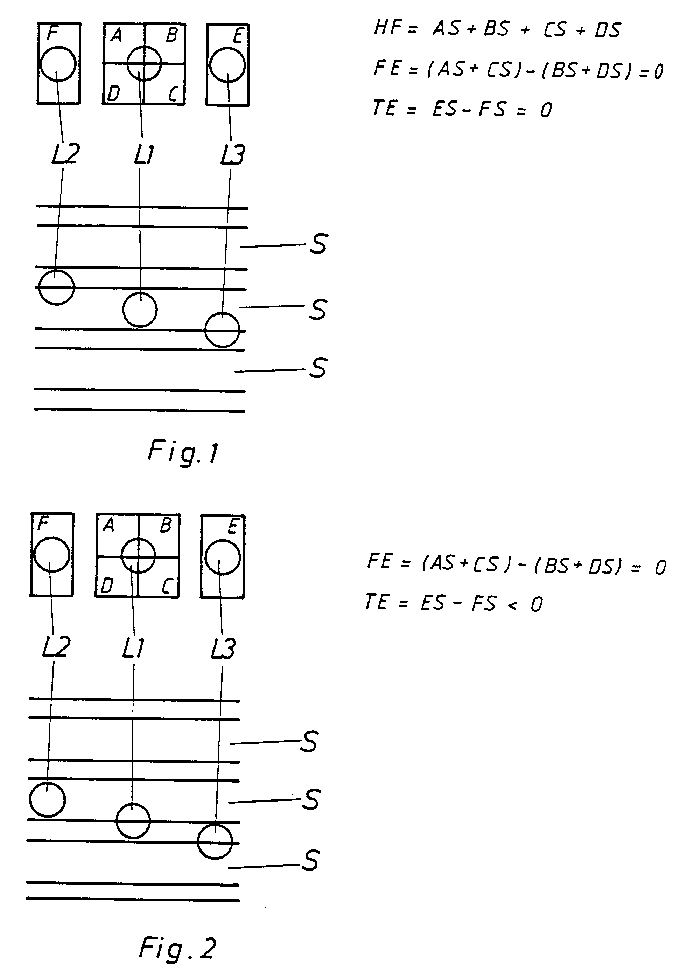

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Die Laserstrahlen L2 und L3 sind die Beugungsstrahlen +1. und -1. Ordnung. Eine derartige Abtastvorrichtung wird in der eingangs genannten Literaturstelle als Three-Beam-Pick-Up bezeichnet, weil sie mit drei Lichtstrahlen arbeitet.

Beim Photodetektor sind vier quadratförmige Photodioden A, B, C und D so zusammengefügt, daß sie wiederum ein Quadrat bilden. Bezüglich dieses aus den vier Photodioden A, B, C und D gebildeten Quadrates liegen sich zwei weitere rechteckige Photodioden E und F diagonal gegenüber. Der mittlere Laserstrahl L1, der auf die vier Photodioden A, B, C und D fokussiert wird, erzeugt das Datensignal HF = AS + BS + CS + DS und das Fokusfehlersignal FE = (AS + CS) - (BS + DS). Die beiden äußeren Lichtstrahlen L2 und L3, von denen der vordere L2 auf die Photodiode E, der hintere L3 auf die Photodiode F fällt, erzeugen das Spurfehlersignal T = ES - FS. Mit AS, BS, CS, DS, ES und FS sind jeweils die Photospannungen der Dioden A, B, C, D, E und F bezeichnet.

In der Figur 1 folgt der mittlere Laserstrahl L1 genau der Mitte einer Spur S. Das Spurfehlersignal TE hat den Wert null.

$$TE = ES - FS = 0.$$

In der Figur 2 ist der Fall dargestellt, daß die Laserstrahlen L1, L2 und L2 nach rechts von der Spur S verschoben sind. Das Spurfehlersignal nimmt einen negativen Wert an:

$$TE = ES - FS < 0.$$

Das Stellglied des Spurregelkreises bewegt die optische Abtastvorrichtung nun soweit nach links, bis das Spurfehlersignal TE null wird.

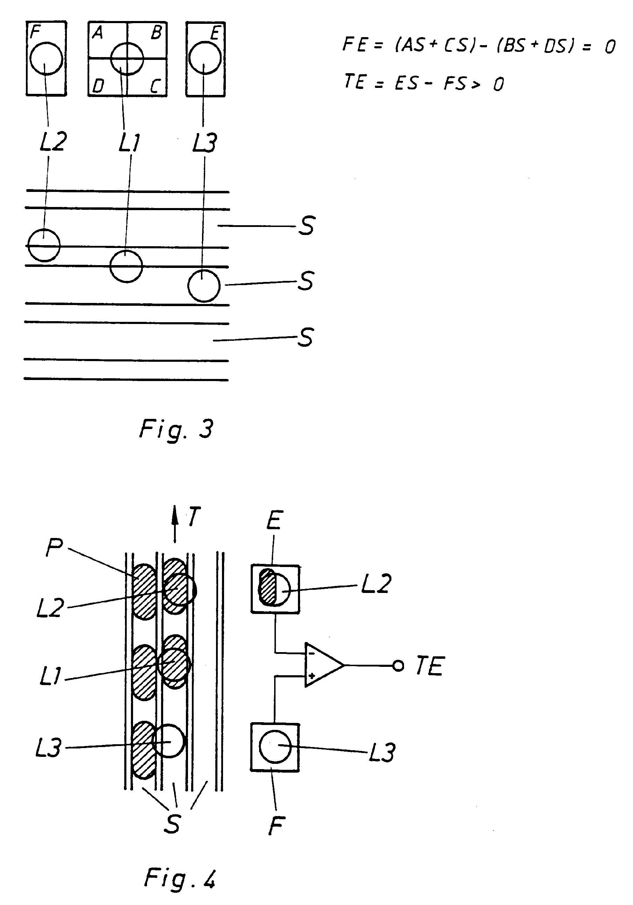

Im entgegengesetzten Fall, wenn die Laserstrahlen nach links von der Spur verschoben sind, ist das Spurfehlersignal positiv: $TE = ES - FS > 0$. Nun bewegt das Stellglied des Spurregelkreises die optische Abtastvorrichtung so weit nach rechts, bis das Spurfehlersignal TE nul wird. Dieser Fall ist in Figur 3 gezeigt.

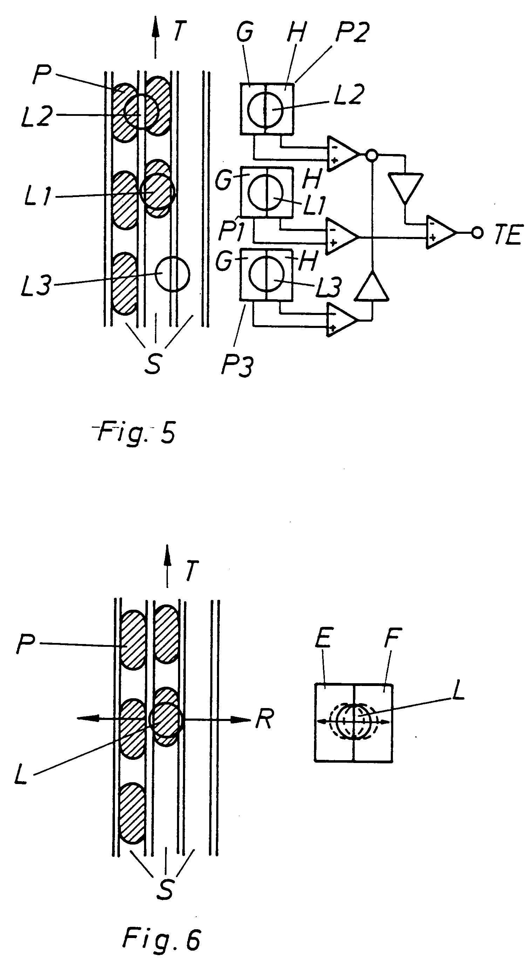

Leider Läßt sich das Dreistrahlverfahren bei einmal beschreibbaren Aufzeichnungträgern, sogenannte Weite-Once-Discs, nicht anwenden, wie anhand der Figur 4 nun erläutert wird.

Weil die Daten mittels des mittleren Laserstrahls L1 aufgezeichnet werden, trifft während des Aufzeichnens von Daten der vordere Laserstrahl L2 stets auf eine bereits beschriebene Stelle, während der hintere Laserstrahl L3 immer auf eine unbeschriebene Stelle strahlt. Mit P sind die Pits der Platte bezeichnet, deren Drehrichtung der Pfeil T angibt. Weil eine bereits beschriebene Stelle auf der Platte je nach Plattenart mehr oder weniger Licht reflektiert als eine unbeschriebene Stelle, empfängt die Photodiode E, auf die der vordere Lichtstrahl L2 trifft, mehr oder weniger Licht als die Photodiode F, auf die der hintere Lichtstrahl L3 trifft. Weil, obwohl der mittlere Lichtstrahl L1 genau in der Mitte einer Datenspur S liegt, das Spurfehlersignal TE dennoch nicht null ist, regelt der Spurregelkreis nach, bis das Spurfehlersignal TE null wird. Dies ist aber gerade dann der Fall, wenn der mittlere Lichtstrahl L1 den Rand einer Datenspur S abtastet.

Durch Addition einer Kompensationsspannung kann diese Abweichung von der Spurmitte zwar kompensiert werden, jedoch wird durch diese Maßnahme der Fangbereich des Reglers eingeschränkt. Wegen des geringeren Fangbereichs nimmt die Empfindlichkeit des Aufnahme- und Wiedergabegerätes gegenüber Erschütterungen und Stößen von außen stark zu.

Eine andere von Sony auf dem Offical Memory Symposium am 18.12. 1986 in Japan vorgestellte Lösung, die in Figur 5 gezeigt ist, sieht vor, daß nur der mittlere Lichtstrahl L1 auf die Mitte der Datenspur trifft, während der vordere Lichtstrahl L2 und der hintere Lichtstrahl L3 genau zwischen die spiralförmigen Datenspuren S fallen. Anstelle der Photodioden E und F und des Photodetektors mit den vier quadratförmigen Photodioden A, B, C und D ist für jeden Lichtstrahl L1, L2 und L3 ein Photodetektor P1, P2 und P3 aus je zwei rechteckförmigen Photodioden G und H vorgesehen.

Bei jedem der drei Photodetektoren P1, P2 und P3 wird die Differenz der Ausgangsspannungen seiner beiden Photodioden G und H in einem Differenzverstärker gebildet. Die auf diese Weise aus den Ausgangsspannungen des vorderen Photodetektors P2 und des hinteren Photodetektors P3 gebildeten Differenzspannungen werden gewichtet, addiert und von der aus den Ausgangsspannungen des mittleren Photodetektors P1 gebildeten Differenzspannung abgezogen, um das Spurfehlersignal TE zu erhalten.

Wie aus der Figur 5 ersichtlich ist, strahlt auf die beiden Photodioden G und H jedes Photodetektors die gleiche Lichtenergie, wenn der Hauptstrahl L1 auf die Mitte der Spur strahlt und die Strahlen +1. und -1. Ordnung, die Lichtstrahlen L2 und L3, genau zwischen den Spuren S auf den Aufzeichnungträger treffen. Beim Aufzeichnen von Daten empfängt der vordere Photodetektor P2 zwar mehr Licht als der hintere Photodetektor P3, jedoch wird dieser Unterschied durch die Gewichtung der Differenzspannungen, die aus den Ausgangssignalen des vorderen Photodetektors P2 und des hinteren Photodetektors P3 gebildet werden, kompensiert.

Ein erster Nachteil dieses modifizierten Dreistrahlverfahrens zeigt sich in seinem großen Aufwand. Ein zweiter Nachteil ist darin zu sehen, daß ein optisches Gitter sehr genau im Strahlengang justiert werden muß, damit die Lichtstrahlen +1. und -1. Ordnung, der vordere Lichtstrahl L2 und der hintere Lichtstrahl L3, genau in die Mitte zwischen zwei Spuren S fallen.

Die beim Dreistrahlverfahren zu berücksichtigenden Schwierigkeiten treten beim sogenannten Push-Pull-Verfahren, das mit nur einem Lichtstrahl arbeitet, nicht auf. Der von der Platte reflektierte Lichtstrahl enthält sowohl die Daten als auch das Spurfehlersignal für den Spurregelkreis.

Zur Erzeugung des Spurfehlersignals macht man sich die beugende Eigenschaft der Pits bzw. der vorgeprägten Spur auf der Platte zunutze. Wenn der Lichtstrahl die Mitte der Spur verläßt, wird die Lichtintensität des kreisförmigen Lichtflecks auf dem Photodetektor, der aus zwei Photodioden aufgebaut ist, asymmetrisch; je nachdem, in welcher Richtung der Lichtstrahl aus der Spur läuft - radial nach innen oder nach außen - wird die eine Hälfte des Lichtflecks heller, während die andere Hälfte dunkler wird. Aus diesem Helligkeitsunterschied, den der Photodetektor erkennt, läßt sich das Spurfehlersignal gewinnen. Damit der Lichtstrahl der abzutastenden Datenspur folgt, die infolge der Exzentrizität der Platte in radialer Richtung eine taumelnde Bewegung ausführt, bewegt der Feinantrieb die Objektivlinse in radialer Richtung, so daß sie die exzentrischen Bewegungen der Platte mitmacht. Weil durch diese Bewegung die Objektivlinse aus der optischen Achse wandert und weil der Lichtfleck den Bewegungen der Objektivlinse folgt, wandert er ebenfalls auf dem Photodetektor. Aus diesem Grund überlagert sich dem Spurfehlersignal, das durch Ausnutzen der beugung an den Pits P bzw. der vorgeprägten Spur der Platte gewonnen wird, ein Störsignal, das eine genaue Spurnachführung nicht mehr gewährleistet. Weil jede Platte eine mehr oder weniger große Exzentrizität aufweist, wird die Objektivlinse vom Feinantrieb daher bei jeder Umdrehung bewegt, damit der Lichtstrahl auf der Spur bleibt. Das erwähnte Störsignal, das auch als Offset bezeichnet wird, tritt daher mehrmals bei jeder Plattenumdrehung mehr oder weniger stark auf.

Abhilfe schafft ein Feinantrieb, der nicht nur die relativ leichte Objektivlinse, sondern die gesamte optische Abtastvorrichtung nachführt. Weil aber die vom Feinantrieb geregelten Bewegungen schnell und genau erfolgen müssen, um den Lichtstrahl ständig auf der Spur zu halten, sollten möglichst wenig Teile bewegt werden, deren Masse außerdem möglichst gering sein sollte.

In der JP-A- 58 146 034 ist eine optische Abtastvorrichtung folgenden Aufbaus beschrieben.

Ein Laserstrahl strahlt durch eine Sammellinse, einen Polarisationsstrahlteiler, eine λ/4-Platte und eine Objektivlinse auf einen Aufzeichnungsträger, der den Laserstrahl zurück durch die Objektivlinse zum Polarisationsstrahlteiler reflektiert, von wo er rechtwinklig auf einen zweigeteilten Photodetektor aus zwei Photodioden abgelenkt wird. Die Objektivlinse ist relativ zum zweigeteilten Photodetektor bewegbar. Um den Laserstrahl entlang der Datenspuren des Aufzeichnungsträgers führen zu können, ist die Objektivlinse nicht wie üblich senkrecht zur Datenspur - also in radialer Richtung bezüglich der Platte - sondern in einer Richtung bewegbar, die mit der Spurrichtung einen Winkel von 45° einschließt.

Aus dem Aufsatz "Bilplattensysteme im Vergleich" von Karl Tetzner erschienen in Funkschau 22, 1981, Seite 76 - 80 ist eine optische Abtastvorrichtung bekannt, bei der ein von einem Laser erzeugter Lichtstrahl mittels einer Objektivlinse auf eine Bildplatte fokussiert wird. Die Bildplatte reflektiert den Laserstrahl zu einer Zylinderlinse, die ihn auf einen Vierquadrantenphotodetektor fokussiert, der aus vier Photodioden A, B, C und D aufgebaut ist.

Die Summe A + B + C + D der Ausgangssignale der vier Photodioden enthält die Videodaten. Das Fokusfehlersignal, das in dieser Literaturstelle als Vertikalsignal bezeichnet wird, ist nach der Formel (A + B) - (C + D) gebildet. Die Photodioden A und B bzw. C und D liegen sich jeweils im Vierquadrantenphotodetektor diagonal gegenüber.

Es ist nun Aufgabe der Erfindung, eine nach dem Einstrahlverfahren arbeitende optische Abtastvorrichtung, bei der vom Feinantrieb nicht die gesamte Vorrichtung, sondern nur die Objektivlinse bewegt wird, so zu gestalten, daß trotzdem eine genaue Spurführung erzielt wird.

Die Erfindung löst diese Aufgabe dadurch, daß aus den Ausgangssignalen der vier Photodioden des Vierquadrantenphotodetektors das Spurfehlersignal TE nach folgender Formel berechnet wird:

$$TE = k \cdot \{(AS + BS) - (CS + DS) - f \cdot [(AS + DS) - (BS + CS)]\},$$

wobei k und f Proportionalitätsfaktoren sind.

Es zeigen

Figur 6      die Bewegung des Lichtstrahls auf dem Aufzeichnungsträger und dem Photodetektor beim bekannten Einstrahlverfahren

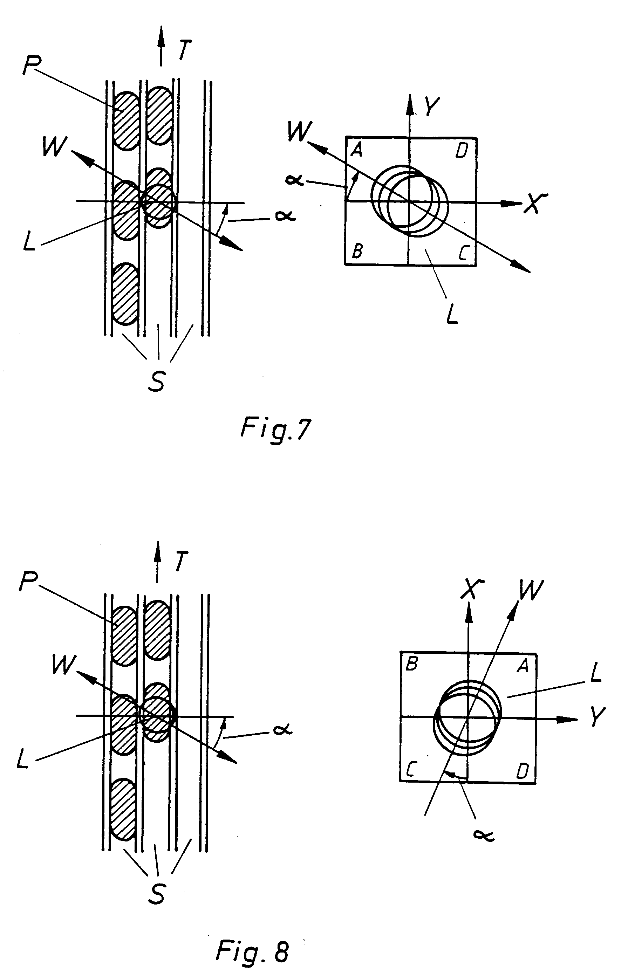

Figur 7      die Bewegung des Lichtstrahls auf dem Aufzeichnungsträger und dem Photodetektor bei der Erfindung.

Figur 8      die Bewegung des Lichtstrahls auf dem Aufzeichnungsträger und dem Photodetektor bei der Astigmatismusmethode

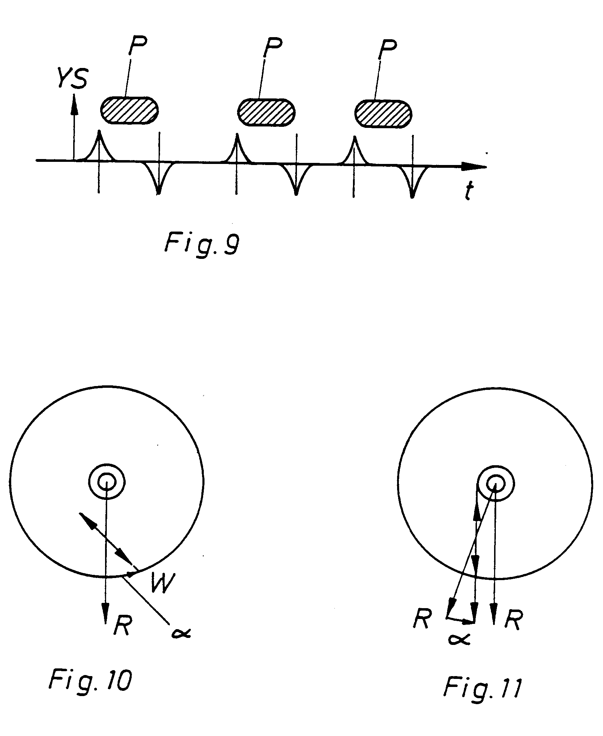

Figur 9      die Intensitätsverteilung des Lichtflecks bei einem mit Pits beschriebenen Aufzeichnungsträger

Figur 10      die Bewegungsrichtung der Abtastvorrichtung und der Objektivlinse bei einem ersten Ausführungsbeispiel

Figur 11      die Bewegungsrichtung der Abtastvorrichtung und der Objektivlinse bei einem zweiten Ausführungsbeispiel

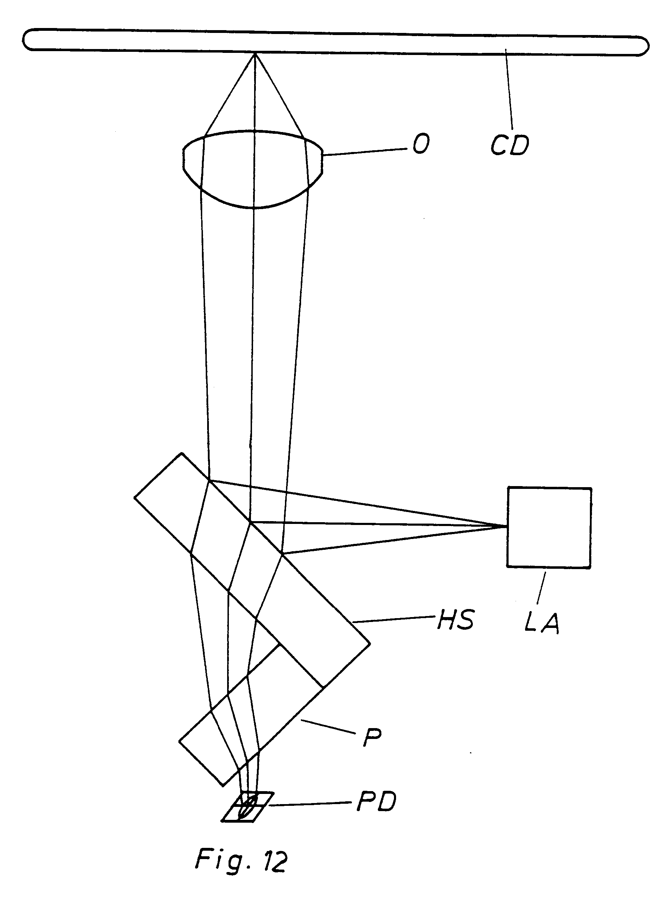

Figur 12      eine Weiterbildung der erfindungsgemäßen optischen Abtastvorrichtung.

Anhand der Figuren 6 und 7 wird die Erfindung nun beschrieben und erläutert.

In der Figur 6 sind drei Datenspuren S gezeigt, von denen eine bereits mit Pits P beschrieben ist, eine mittels des Lichtstrahls L gerade beschrieben wird und eine noch unbeschrieben ist. Die Drehrichtung der Platte ist durch den mit T bezeichneten Pfeil angedeutet, während der mit R bezeichnete Doppelpfeil die Bewegung des Lichtstrahls L auf der Platte in radialer Richtung anzeigt. Die Bewegungen des Lichtstrahls L werden auf dem Photodetektor, der aus zwei rechteckförmigen Photodioden E und F aufgebaut ist, abgebildet. Der Lichtfleck L bewegt sich auf dem Photodetektor ebenfalls in Richtung des Doppelpfeiles R, wenn die Objektivlinse in radialer Richtung bewegt wird.

In Figur 7 sind die Verhältnisse bei der Erfindung dargestellt. Weil die Objektivlinse bei der Erfindung nicht nur in radialer Richtung vom Feinantrieb, sondern in einer Richtung bewegt wird, die einen Winkel α zur radialen Richtung einschließt, wandert der Lichtstrahl L auf der Platte ebenfalls unter diesem Winkel α, wenn der Feinantrieb die Objektivlinse bewegt.

Als Photodetektor ist ein Vierquadrantenphotodetektor aus vier Photodioden A, B, C und D vorgesehen, dessen eine Achse, die im weiteren Verlauf als y-Achse bezeichnet wird, in tangentialer Richtung verläuft. Die andere senkrecht zur y-Achse und parallel zur radialen Richtung verlaufenden Achse des Vierquadrantenphotodetektors wird im weiteren Verlauf als x-Achse bezeichnet.

Wenn nun der Feinantrieb die Objektivlinse in der angegebenen Richtung, die zur radialen Richtung den

4

Winkel $\alpha$ einschließt, bewegt, damit der Lichtstrahl der Spur folgt, wandert der Lichtfleck L auf dem Vierquadrantenphotodetektor auf einer Geraden, die mit der x-Achse ebenfalls einen Winkel $\alpha$ einschließt.

Wie aus den Ausgangsspannungen AS, BS, CS und DS der Photodioden A, B, C und D das Spurfehlersignal TE zu erzeugen ist, wird nun erläutert.

Aus den Signalen

$$YS = (AS + DS) - (BS + CS)$$

und

$$XS = (AS + BS) - (CS + DS)$$

wird das Spurfehlersignal TE abgeleitet. Weil der Winkel $\alpha$ bekannt ist, gelten für die Signale XS und YS die folgenden Gleichungen:

$$XS = \cos\alpha\cdot(TE + LX)$$
$$YS = LX \cdot \sin\alpha$$

Mit LX ist die Abweichung des Lichtflecks L in x-Richtung von der Detektormitte bezeichnet. Das Spurfehlersignal TE ergibt sich zu

$$TE = XS/\cos\alpha - YS/\sin\alpha = = [(AS + BS) - (CS + DS)]/\cos\alpha - [(AS + DS) - (BS + CS)]/\sin\alpha$$
$$TE = k\cdot\{(AS + BS) - (CS + DS) - \cot\alpha\cdot[(AS + DS) - (BS + CS)]\}$$

Wenn der Vierquadrantenphotodetektor so ausgerichtet ist, daß die Trennlinie, welche die linken Photodioden A und B von den rechten Photodioden C und D trennt, die y-Achse, parallel zur Spur verläuft, so ist die Verteilung der Intensität im Lichtfleck bezüglich der y-Richtung symmetrisch, wenn die Platte entlang der Spur homogen ist, wie es z.B. bei einer Write-Once-Disc oder einer magneto-optischen Platte der Fall ist.

Bei einer CD-Platte wird die Verteilung der Intensität in y-Richtung jedoch beim Abtasten des Anfangs und des Endes eines Pits unsymmetrisch. Der zeitliche Verlauf des Signals YS ist in Figur 9 gezeigt. Weil dieses Signal YS keinen Gleichanteil hat, kann es mittels eines Tiefpasses leicht eliminiert werden. Die Erfindung ist daher nicht nur für Write-Once-Discs, sondern auch für CD-Platten geeignet.

Bei einigen optischen Abtastvorrichtungen ist im Strahlengang ein astigmatisch wirkendes Element, z.B. eine Zylinderlinse, vorgesehen. Der vom astigmatisch wirkenden Element verursachte Astigmatismus dient bei der sogenannten Asigmatismusmethode der Fokussierung des Lichtstrahls auf den Aufzeichnungsträger.

Wenn die optische Abtastvorrichtung mit einem astigmatisch wirkenden Element ausgestattet ist, ist der Vierquadrantenphotodetektor, wie in Figur 8 gezeigt ist, um 90° zu drehen.

Um die Bewegung der Objektivlinse in einer Richtung, die zur radialen Richtung den Winkel $\alpha$ einschließt, zu erzielen, sind zwei Lösungen möglich. Bei der ersten Lösung wird die optische Abtastvorrichtung vom Grobantrieb in radialer Richtung bewegt; die Objektivlinse wird dagegen vom Feinantrieb in einer Richtung, die mit der radialen Richtung den Winkel $\alpha$ einschließt, bewegt. Diese erste Lösung ist in Figur 10 dargestellt.

Es ist aber auch möglich, für die optische Abtastvorrichtung und die Objektivlinse die gleiche Bewegungsrichtung vorzusehen, jedoch die Bewegungsachse parallel zur radialen Richtung zu versetzen, wie in Figur 11 angedeutet ist.

Diese zweite Lösung hat allerdings den Nachteil, daß sich der Winkel $\alpha$ mit dem Abstand der Abtastvorrichtung von der Plattenmitte ändert. Dadurch ändert sich aber auch die Verstärkung des Spurfehlersignals; sie wird von der Position der Abtastvorrichtung abhängig. Außerdem verursacht die Tangentialkomponente der Bewegung der Abtastvorrichtung beim Auslesen der Daten einen Phasenjitter.

Durch die Maßnahme, zur Bewegung des Lichtflecks in x-Richtung eine Bewegung in y-Richtung zu addieren, wird die Abweichung des Lichtflecks in x-Richtung berechenbar. Hierzu wird zunächst die Abweichung in y-Richtung bestimmt, die nicht von der Intensitätsverteilung im Lichtfleck abhängt. Weil aber der Winkel $\alpha$ bekannt ist, läßt sich die Abweichung des Lichtflecks in x-Richtung berechnen. Die in der Formel für das Spurfehlersignal TE angegebenen Summen und Differenzen werden z.B. mittels Differenz- und Additionsverstärker gebildet. Die Gewichtung der Summen und Differenzen erfolgt mittels Verstärker. Das Datensignal und das Fokusfehlersignal für den Fokusregelkreis lassen sich auf die gleiche Weise wie beim Dreistrahlverfahren aus den Ausgangssignalen AS, BS, CS und DS des Vierquadrantenphotodetektors gewinnen.

Bei einer optischen Abtastvorrichtung, die nach dem Einstrahlverfahren arbeitet, wird der Lichtstrahl eines Lasers z.B. von einem halbdurchlässigen Spielgel rechtwinklig auf die Platte, die sogenannte Compact Disc, abgelenkt und mittels einer Objektivlinse auf die Platte fokussiert. Von der Platte wird der Lichtstrahl durch die Objektivlinse hindurch zurück zum halbdurchlässigen Spiegel reflektiert, den er durchstrahlt, um eine Konvexlinse, z.B. eine Plankonvexlinse, durchstrahlend auf den Vierquadrantenphotodetektor PD zu treffen. Der Vierquadrantenphotodetektor PD ist im Fokus angeordnet.

Weil zur Erzeugung des Datensignals und des Fokusfehlersignals ein kreisförmiger Lichtfleck auf dem Vierquadrantenphotodetektor erforderlich ist, liegt zwischen dem halbdurchlässigen Spiegel HS und dem Vierquadrantenphotodetektor PD die Konvexlinse K, die den Lichtstrahl verbreitert. Im Fokus bildet sich daher anstelle eines Lichtpunktes ein kreisförmiger Lichtfleck auf dem Vierquadrantenphotodetektor PD ab.

Ein wesentlicher Nachteil dieser optischen Abtastvorrichtung ist durch die Konvexlinse bedingt, denn es handelt sich bei der Konvexlinse um ein teures optisches Bauteil, dessen genaue Justierung, die unbedingt erforderlich ist, relativ schwierig ist.

Ein weiterer Nachteil liegt darin, daß durch den halbdurchlässigen Spiegel HS ein Strahlenversatz verursacht wird.

Bei der in Figur 12 gezeigten Weiterbildung der optischen Abtastvorrichtung strahlt der von einem Laser LA erzeugte Lichtstrahl auf einen halbdurchlässigen Spiegel HS, der den Lichtstrahl rechtwinklig auf die Compact Disc CD ablenkt. Mittels einer zwischen dem halbdurchlässigen Spiegel HS und der Platte CD liegenden Objektivlinse 0 wird der Lichtstrahl auf die Platte CD fokussiert, von wo er zurück zum halbdurchlässigen Spiegel HS reflektiert wird. Rechtwinklig zum halbdurchlässigen Spiegel HS ist eine Glasplatte P an einer Stirnseite des halbdurchlässigen Spiegels z.B. mittels Klebstoff befestigt. Der von der Platte CD reflektierte Lichtstrahl strahlt durch die Objektivlinse 0, durch den halbdurchlässigen Spiegel HS und durch die Glasplatte P zum Vierquadrantenphotodetektor PD.

Die Glasplatte P, die im rechten Winkel zum halbdurchlässigen Spiegel HS angeordnet ist, bewirkt wie eine Konvexlinse eine Verbreiterung des Lichtstrahls. Jedoch ist eine einfache Glasplatte wesentlich billiger als eine Konvexlinse.

Ein weiterer Vorteil wird erzielt, wenn entweder die Glasplatte P an einer Stirnseite des halbdurchlässigen Spiegels HS oder der halbdurchlässige Spiegel HS an einer Stirnseite der Glasplatte P befestigt ist. Bei dieser Weiterbildung braucht nur ein Teil - die Anordnung aus dem halbdurchlässigen Spiegel HS und der Glasplatte P - justiert zu werden. Die Justierung einer Konvexlinse entfällt.

Wenn der halbdurchlässige Spiegel HS und die Glasplatte P die gleichen optischen Eigenschaften haben, wird außerdem der lästige Strahlenversatz vermieden. Anstelle aus Glas kann die Platte P auch aus Kunststoff hergestellt sein.

Bei der in Figur 12 gezeigten Weiterbildung der optischen Abtastvorrichtung ist der halbdurchlässige Spiegel HS an die Stirnseite der Glasplatte P oder die Glasplatte P an die Stirnseite des halbdurchlässigen Spielgels HS geklebt.

**Patentansprüche**

1. Optische Abtastvorrichtung mit einer Objektivlinse für ein Aufzeichnungs- und/oder Wiedergabegerät, bei dem ein Lichtstrahl (L) nach dem Einstrahlverfahren auf einen Aufzeichnungsträger fokussiert und vom Aufzeichnungsträger auf einen Vierquadrantenphotodetektor aus vier Photodioden (A, B, C, D) reflektiert wird, dessen eine Achse parallel zur Spurrichtung verläuft, bei dem aus den Ausgangssignalen (AS, BS, CS, DS) der Photodioden des Vierquadrantenphotodetektors durch Summen- und Differenzbildung das Spurfehlersignal TE erzeugt wird, bei dem der Lichtstrahl (L) mittels eines Spurregelkreises, der aus einem Grobantrieb und einem mit dem Grobantrieb mechanisch verbundenen Feinantrieb aufgebaut ist, auf den Datenspuren (S) des Aufzeichnungsträgers geführt wird, bei dem die Objektivlinse relativ zum Vierquadrantenphotodetektor mittels des Feinantriebs in einer Richtung (W) bewegbar oder kippbar ist, die einen Vorgebbaren Winkel α zur Normalen (R) der Spurrichtung einschließt, **dadurch gekennzeichnet,** daß aus den Ausgangssignalen (AS, BS, CS, DS) der vier Photodioden (A, B, C, D) des Vierquadrantenphotodetektors das Spurfehlersignal TE nach folgender Formel berechnet wird:

$$TE = k \cdot \{(AS + BS) - (CS + DS) - f \cdot [(AS + DS) - (BS + CS)]\},$$

wobei k und f Proportionalitätsfaktoren sind.

2. Optische Abtastvorrichtung nach Anspruch 1, **dadurch gekennzeichnet,** daß der Proportionalitätsfaktor k gleich 1/cos α und der Proportionalitätsfaktor f gleich dem cot α ist.

3. Optische Abtastvorrichtung nach Anspruch 1 oder 2 **dadurch gekennzeichnet,** daß der Winkel α kleiner gleich 45° gewählt ist.

4. Optische Abtastvorrichtung nach Anspruch 1, 2 oder 3, **dadurch gekennzeichnet,** daß der von einer Lichtquelle (LA) erzeugte Lichtstrahl mittels eines halbdurchlässigen Spiegels (HS) auf den Aufzeichnungsträger (CD) gelenkt wird und vom Aufzeichnungsträger (CD) den halbdurchlässigen Spiegel (HS) durchstrahlend auf den Photodetektor (PD) reflektiert wird und daß im Strahlengang des vom Aufzeichnungsträger (CD) reflektierten Lichtstrahls eine Lichtdurchlässige Platte (P) zwischen dem halbdurchlässigen Spiegel (HS) und dem Photodetektor (PD) rechtwinklig zum halbdurchlässigen Spiegel (HS) angeordnet ist.

**5.** Optische Atastvorrichtung nach Anspruch 4, **dadurch gekennzeichnet**, daß der halbdurchlässige Spiegel (HS) und die Platte (P) aus dem gleichen Material gefertigt sind.

**6.** Optische Abtastvorrichtung nach Anspruch 5, **dadurch gekennzeichnet**, daß der halbdurchlässige Spiegel (HS) und die Platte (P) als ein Teil gefertigt sind.

**7.** Optische Abtastvorrichtung nach Anspruch 4 oder 5, **dadurch gekennzeichnet**, daß der halbdurchlässige Spiegel (HS) und die Platte (P) aneinander befestigt sind.

**8.** Optische Abtastvorrichtung nach Anspruch 7, **dadurch gekennzeichnet**, daß der halbdurchlässige Spiegel (HS) an einer Stirnseite der Platte (P) oder die Platte (P) an einer Stirnseite des halbdurchlässigen Spiegels (HS) befestigt ist.

**9.** Optische Abtastvorrichtung nach Anspruch 7 oder 8, **dadurch gekennzeichnet**, daß der halbdurchlässige Spiegel (HS) und die Platte (P) miteinander verklebt sind.

**10.** Optische Abtastvorrichtung nach Anspruch 4, 5, 6, 7, 8, oder 9, **dadurch gekennzeichnet**, daß die Platte (P) aus Glas oder Kunststoff gefertigt ist.

**11.** Optische Abtasvorrichtung nach Anspruch 4, 5, 6, 7, 8, 9 oder 10, **dadurch gekennzeichnet**, daß der halbdurchlässige Spiegel (HS) und die Platte (P) gleich dick sind.

**12.** Optische Abtastvorrichtung nach Anspruch 4, 5, 6, 7, 8, 9, 10 oder 11, **dadurch gekennzeichnet**, daß der halbdurchlässige Spiegel (HS) und die Platte (P) aus Material gleicher optischer Eingenschaften gefertigt sind.

## Claims

**1.** Optical scanning device including an objective lens for a recording- and/or reproducing device in which a light beam (L) is focused on a record carrier in accordance with the single beam method and is reflected from the record carrier onto a four quadrant photo-detector comprising four photodiodes (A, B, C, D) whose one axis runs parallel to the track direction, in which the tracking error signal TE is obtained from the output signals (AS, BS, CS, DS) of the photodiodes of the four quadrant photo-detector by forming the sums and differences, in which the light beam is guided onto the data track (S) of the record carrier by means of a tracking control loop formed by a coarse adjustment means and a fine adjustment means mechanically connected to the coarse adjustment means, in which the objective lens is movable or tiltable relative to the four quadrant photo-detector by means of the fine adjustment means in a direction (W) which forms a predetermined angle $\alpha$ to the normal (R) to the track direction, characterised in that, the tracking error signal TE is calculated from the output signals (AS, BS, CS, DS) of the four photodiodes (A, B, C, D) of the four quadrant photo-detector by the following formula:
$$TE = k \cdot \{(AS + BS) - (CS + DS) - f \cdot [(AS + DS) - (BS + CS)]\},$$
wherein k and f are factors of proportionality.

**2.** Optical scanning device in accordance with Claim 1, characterised in that, the factor of proportionality k is equal to 1 / cos $\alpha$ and the factor of proportionality f is equal to the cot $\alpha$.

**3.** Optical scanning device in accordance with Claim 1 or 2, characterised in that, the angle a is selected to be smaller than or equal to 45°.

**4.** Optical scanning device in accordance with Claim 1, 2 or 3, characterised in that, the light beam emitted from a light source (LA) is guided onto the record carrier (CD) by means of a semi-transparent mirror (HS) and is reflected from the record carrier (CD) through the semi-transparent mirror (HS) onto the photodiode (PD) and that a transparent plate (P) is arranged in the path of the beam of the light beam reflected from the record carrier (CD) between the semi-transparent mirror (HS) and the photodiode (PD) at right angles to the semi-transparent mirror (HS).

**5.** Optical scanning device in accordance with Claim 4, characterised in that, the semi-transparent mirror (HS) and the plate (P) are constructed of the same material

6. Optical scanning device in accordance with Claim 5, characterised in that, the semi-transparent mirror (HS) and the plate (P) are constructed in one piece.

7. Optical scanning device in accordance with Claim 4 or 5, characterised in that, the semi-transparent mirror (HS) and the plate (P) are attached to one another.

8. Optical scanning device in accordance with Claim 7, characterised in that, the semi-transparent mirror (HS) is attached to a front face of the plate (P) or the plate (P) is attached to a front face of the semi-transparent mirror (HS).

9. Optical scanning device in accordance with Claim 7 or 8, characterised in that, the semi-transparent mirror (HS) and the plate (P) are adhered to each other.

10. Optical scanning device in accordance with Claim 4, 5, 6, 7 8 or 9, characterised in that, the plate (P) is constructed out of glass or a synthetic material.

11. Optical scanning device in accordance with Claim 4, 5, 6, 7 8, 9 or 10, characterised in that, the semi-transparent mirror (HS) and the plate (P) are equally thick.

12. Optical scanning device in accordance with Claim 4, 5, 6, 7 8, 9, 10 or 11, characterised in that, the semi-transparent mirror (HS) and the plate (P) are constructed from material of similar optical properties.


**Revendications**

1. Dispositif de balayage optique avec une lentille d'objectif pour un appareil d'enregistrement et/ou de lecture dans lequel un faisceau lumineux (L) est focalisé, selon le procédé à un faisceau, sur un support d'enregistrement et est réfléchi par le support d'enregistrement sur un photodétecteur à quatre quadrants composé de quatre photodiodes (A, B, C, D) dont l'un des axes est parallèle au sens de la piste, dans lequel le signal d'erreur de piste TE est produit à partir des signaux de sortie (AS, BS, CS, DS) des photodiodes du photodétecteur à quatre quadrants par formation de la somme et de la différence, dans lequel le faisceau lumineux (L) est guidé sur les pistes de données (S) du support d'enregistrement au moyen d'un circuit de réglage de piste qui est constitué d'une commande grossière et d'une commande fine reliée de manière mécanique à la commande grossière, dans lequel la lentille d'objectif peut être déplacée ou basculée par rapport au photodétecteur à quatre quadrants au moyen de la commande fine dans un sens (W) qui comprend un angle $\alpha$ par rapport à la normale (R) du sens de la piste qui peut être prédéterminé, caractérisé en ce que le signal d'erreur de piste TE est calculé à partir des signaux de sortie (AS, BS, CS, DS) des quatre photodiodes (A, B, C, D) du photodétecteur à quatre quadrants selon la formule suivante :

$$TE = k. \{ (AS + BS) - (CS + DS) - f. [(AS + DS) - (BS + CS)]\}$$

k et f étant des facteurs de proportionalité.

2. Dispositif de balayage optique selon la revendication 1, **caractérisé en ce** que le facteur de proportionalité k est égal à 1/cos$\alpha$ et le facteur de proportionalité f est égal au cot$\alpha$.

3. Dispositif de balayage optique selon la revendication 1 ou 2, **caractérisé en ce** que l'angle $\alpha$ est sélectionné inférieur à 45°.

4. Dispositif de balayage optique selon la revendication 1, 2 ou 3, **caractérisé en ce** que le faisceau lumineux produit par une source de lumière (LA) est dévié au moyen d'un miroir semi-perméable (HS) sur le support d'enregistrement (CD) et est réfléchi par le support d'enregistrement (CD) sur le photodétecteur (PD) en traversant le miroir semi-perméable (HS) et qu'une plaque perméable à la lumière (P) est placée dans la marche des rayons du faisceau de lumière réfléchi par le support d'enregistrement (CD) entre le miroir semi-perméable (HS) et le photodétecteur (PD) à angles droits avec le miroir semi-perméable (HS).

5. Dispositif de balayage optique selon la revendication 4, **caractérisé en ce** que le miroir semi-perméable (HS) et le disque (P) sont fabriqués en la même matière.

6. Dispositif de balayage optique selon la revendication 5, **caractérisé en ce** que le miroir semi-perméable (HS) et la plaque (P) sont réalisés en une partie.

7. Dispositif de balayage optique selon la revendication 4 ou 5, **caractérisé en ce** que le miroir semi-perméable (HS) et la plaque (P) sont fixés l'un à l'autre.

8. Dispositif de balayage optique selon la revendication 7, **caractérisé en ce** que le miroir semi-perméable (HS) est fixé sur un côté devant du disque (P) ou le disque (P) sur un côté devant du miroir semi-perméable (HS):

9. Dispositif de balayage optique selon la revendication 7 ou 8, **caractérisé en ce** que le miroir semi-perméable (HS) et le disque (P) sont collés l'un à l'autre.

10. Dispositif de balayage optique selon la revendication 4, 5, 6, 7, 8, 9 ou 10, **caractérisé en ce** que la plaque (P) est fabriquée en verre ou en matière plastique.

11. Dispositif de balayage optique selon la revendication 4, 5, 6, 7, 8 ou 9, **caractérisé en ce** que le miroir semi-perméable (HS) et le disque (P) sont de même épaisseur.

12. Dispositif de balayage optique selon la revendication 4, 5, 6, 7, 8, 9, 10 ou 11, **caractérisé en ce** que le miroir semi-perméable (HS) et la plaque (P) sont fabriqués en une matière de mêmes qualités optiques.

$$HF = AS + BS + CS + DS$$

$$FE = (AS + CS) - (BS + DS) = 0$$

$$TE = ES - FS = 0$$

Fig. 1

$$FE = (AS + CS) - (BS + DS) = 0$$

$$TE = ES - FS < 0$$

Fig. 2

EP 0 454 740 B1

$$FE = (AS + CS) - (BS + DS) = 0$$

$$TE = ES - FS > 0$$

Fig. 3

Fig. 4

Fig. 5

Fig. 6

Fig.7

Fig. 8

13

Fig. 9

Fig. 10

Fig. 11

14

Fig. 12